(19) Europäisches Patentamt

European Patent Office

Office européen des brevets

(11) **EP 1 604 957 A1**

(12) **EUROPEAN PATENT APPLICATION**
published in accordance with Art. 158(3) EPC

(43) Date of publication:
**14.12.2005 Bulletin 2005/50**

(51) Int Cl.⁷: **C03B 20/00**

(21) Application number: **04720716.2**

(22) Date of filing: **15.03.2004**

(86) International application number:
**PCT/JP2004/003446**

(87) International publication number:
**WO 2004/083139 (30.09.2004 Gazette 2004/40)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **19.03.2003 JP 2003075866**

(71) Applicant: **Sumitomo Electric Industries, Ltd.
Osaka-shi, Osaka 541-0041 (JP)**

(72) Inventors:
• **ISHIKAWA, Shinji,**
c/o Sumitomo Electric Ind. Ltd.
Yokohama-shi, Kanagawa 244-8588 (JP)

• **KATAYAMA, Tetsutaro,**
c/o Sumitomo Elect. Ind. Ltd.
Yokohama-shi, Kanagawa 244-8588 (JP)
• **NAKAMURA, Motonori,**
c/o Sumitomo Electric Ind. Ltd
Yokohama-shi, Kanagawa 244-8588 (JP)
• **SAKAI, Tatsuro, c/o Sumitomo Electric Ind. Ltd.**
Yokohama-shi, Kanagawa 244-8588 (JP)
• **KOGO, Takashi, c/o Sumitomo Electric Ind. Ltd.**
Yokohama-shi, Kanagawa 244-8588 (JP)

(74) Representative: **HOFFMANN EITLE
Patent- und Rechtsanwälte
Arabellastrasse 4
81925 München (DE)**

(54) **METHOD FOR PRODUCING GLASS MATERIAL**

(57)     A method of producing a glass blank with a high rate and high efficiency of deposition on a starting member is provided. A raw material powder including silica-glass-containing particles is transferred with a carrier gas and supplied into a flame, and the raw material powder and the flame are sprayed on a starting member to deposit the raw material powder on the starting member and form a porous body. The porous body is consolidated by heating.

FIG. 1

## Description

Technical Field

The present invention relates to a method of producing a transparent glass blank composed of silica ($SiO_2$) glass as a main component. More specifically, the present invention relates to a method of producing a transparent glass blank mainly composed of silica glass, the method comprising depositing glass particulates on the surface of a starting member to produce a porous body and then consolidating the porous body.

Background Art

There have been thus far several known methods of producing silica glass blanks. Examples of the known methods include a method (method I) comprising electrically fusing natural quartz in a vacuum or an inert gas atmosphere, a method (method II) comprising fusing natural quartz powder by an oxyhydrogen flame, a method (method III) comprising spraying silicon tetrachloride ($SiCl_4$) in an oxyhydrogen flame to produce silica glass by flame hydrolysis, and a method (method IV) of producing silica glass from $SiCl_4$ in a plasma flame containing no moisture (Breuckner, Journal of Non-Cristalline Solids, 5, North-Holland Publishing Co. (1970), P. 124).

An Outside Vapor Phase Deposition (OVD) and a Vapor Phase Axial Deposition (VAD) are known methods of producing a porous body used for producing an optical fiber preform. In these methods, a raw material gas of $SiCl_4$ is supplied to a flame produced by the combustion of oxygen ($O_2$) and hydrogen ($H_2$) and/or methane ($CH_4$) so as to produce $SiO_2$ particles by flame hydrolysis and/or oxidation reaction such that the $SiO_2$ particles are deposited on the surface of a starting member to produce the porous body (Tingi Li, "Optical Fiber Communication Vol. 1", Academic Press, Inc., 1985, Chapters 2 and 3).

Another known method of producing an optical fiber glass preform is a plasma spraying method comprising fusing a glass powder of about 200 mesh in a plasma such that the fused glass powder is deposited on the surface of a starting member (Japanese Unexamined Patent Application Publication No. 50-99342).

Further a method comprising producing $SiO_2$ particulates of 0.01 to 0.05 $\mu$m diameter by vapor phase synthesis beforehand, and spraying the $SiO_2$ particulates into a flame ejected to a starting member such that the $SiO_2$ particulates are deposited on the starting member, and a method comprising spraying the $SiO_2$ particulates on a starting member through an induction furnace or a plasma furnace such that the $SiO_2$ particulates are deposited on the starting member are disclosed in Japanese Unexamined Patent Application Publication No. 61-77631. In the methods disclosed in Japanese Unexamined Patent Application Publication No.

61-77631, the $SiO_2$ particulates, which are dispersed in a liquid, are sprayed, and the liquid component is evaporated by a flame, the induction furnace, or the plasma furnace.

The method 1 and method II of Breuckner using natural quartz powder as a raw material have high productivity because a large amount of the glass raw material can be deposited on the surface of the starting member per unit time. However, impurities contained in the raw material, for example, aluminum (Al), iron (Fe), and sodium (Na), remain in the produced glass blank, and thus the glass blank exhibits a low transmittance in the ultraviolet region. Since the size of the glass particulates used is generally several $\mu$m or more, a temperature higher than the fusion temperature of quartz is required for consolidating the porous body produced by depositing the glass particulates on the starting member. Furthermore, since the glass particulates are dropped by gravity on the starting member so as to be deposited on the starting member, the location of an apparatus for supplying the glass particulates is fixed relative to the location of the starting member, and thus the freedom of equipment layout decreases.

In the methods disclosed in Japanese Unexamined Patent Application Publication No. 61-77631, the glass particulates used as the raw material are supplied, in a state dispersed in a liquid, onto the starting member from an injection nozzle through a burner, the induction furnace or the plasma furnace. Therefore, the temperature of the glass particulates is liable to decrease due to heat of evaporation of the liquid. Also, the use of the liquid tends to cause the glass to be contaminated with the impurities contained in the liquid.

On the other hand, the amount of unnecessary impurities contained in the glass blank can be decreased in the OVD method and VAD method. Also, the amount of OH groups present in the glass blank can be decreased by heat treatment in the presence of a halogen compound, and accordingly light absorption by the OH groups in the infrared region can be decreased. Therefore, a glass blank suitable as a preform for producing optical fibers can be produced. However, in the OVD method and VAD method, the glass raw material is supplied in a gaseous state, and a reaction time is required for hydrolysis or oxidation reaction of the raw material gas in the flame. Therefore, the concentration of the raw material in the flame cannot easily be increased. Therefore, it has been difficult to increase the productivity of the glass blank by significantly increasing the amount of glass deposited on the starting member per unit time than in the past.

This problem will be described in further detail below. In the vapor phase synthesis of glass according to a method using $SiCl_4$ or the like, $SiO_2$ is produced by oxidation and/or hydrolysis reaction of $SiCl_4$ or the like, and the $SiO_2$ particles thus produced grow and move to a low-temperature region by a thermophoresis effect due to a heat gradient Brownian movement, and accord-

ingly the $SiO_2$ particles are deposited on the surface of the starting member and the surface formed by deposition of the glass particulates on the starting member (hereinafter these surfaces are collectively referred to as the "glass particulate deposition surface"), the temperature of theses surfaces being lower than the gas temperature.

Therefore, in order to effectively utilize the thermophoresis effect for increasing the deposition efficiency of the glass particulates on the glass particulate deposition surface, the particle diameter of the glass particulates must be deceased, and the gas temperature must be increased. In the OVD method and VAD method, however, an increase in the gas temperature accelerates the reaction for producing $SiO_2$ from $SiCl_4$, thereby increasing the particle diameter of the resultant glass particulates.

Also, if the supply rate of the raw material $SiCl_4$ is increased for increasing the deposition rate of the glass particulates to be deposited on the starting member, the raw material reaches the glass particulate deposition surface before the reaction sufficiently proceeds for producing glass from the raw material, and thus the deposition efficiency of the glass particulates relative to the amount of the raw material used is decreased. If only the flow rate of the raw material is decreased for sufficiently proceeding the reaction for producing glass from the raw material without a decrease in the amount of the raw material supplied per unit time, the area of the region in which the raw material is supplied must be increased. Consequently, the produced glass particulates are moved in the form of a wide flow to the glass particulate deposition surface. This results in the increase of the distance in which the glass particulates must be moved in a direction perpendicular to the flow of the glass particulates until the glass particulates reach the glass particulate deposition surface, and accordingly the efficiency of deposition of the glass particulates on the glass particulate deposition surface is decreased.

Disclosure of Invention

It is an object of the present invention to provide a method of producing a glass blank with a high rate and high efficiency of deposition on a starting member.

In order to achieve the object, a method of producing a glass blank comprises transporting a raw material powder containing silica-glass-containing particles with a carrier gas, supplying the raw material powder to a flame and spraying the raw material powder and the flame on a starting member to deposit the raw material powder on the starting member and form a porous body, and then consolidating the porous body by heating. The phrase "transporting with a carrier gas" means that the raw material powder is moved together with the carrier gas.

The average diameter of the particulates may be $0.2\ \mu m$ or less. The carrier gas may contain a combustible gas and/or a combustion assisting gas. At least one of the Si-OH groups possessed by the particles may be replaced with an Si-OR group (R represents an organic group).

The raw material powder and the carrier gas may be mixed in a raw material powder container to fluidize the raw material powder before the raw material powder is transferred with the carrier gas. In this case, the raw material powder may be mechanically mixed with the carrier gas by vibrating the container or by rotating a rotor in the raw material powder container.

The raw material gas and the carrier gas may be transferred into the flame by suction with a negative-pressure generating means. The amount of the raw material powder supplied may be controlled by controlling the mixing ratio of the raw material powder to the carrier gas. In this case, the mixing ratio may be controlled by controlling the flow rate of the carrier gas or controlling the tip position of a raw material supply pipe inserted into the raw material powder container.

Brief Description of the Drawings

The present invention will be described in detail below with reference to the drawings. The drawings are adapted for describing the invention, but not for limiting the scope of the invention.

Figure 1 is a schematic view of an apparatus for a production method according to a first embodiment of the present invention.

Figure 2 is a schematic view of an apparatus for a production method according to a second embodiment of the present invention.

Figure 3 is a schematic view of an apparatus for a production method according to a fifth embodiment of the present invention.

Figure 4 is a schematic view of an apparatus for a production method according to a fourth embodiment of the present invention.

Figure 5 is a front view showing an example of a multi-port burner.

Figure 6 is a schematic view of an apparatus for a production method according to a third embodiment of the present invention.

Figure 7 is a sectional view showing an example of an ejector.

Figure 8 is a graph showing the relation between the flow rate of the carrier gas introduced into a raw material powder container and the average particle density of particles in the raw material powder container.

Figure 9 is a graph showing the relation between the particle density and the quantity of transmitted light.

Figure 10 is a schematic view of a raw material powder container used in a production method according to an embodiment of the present invention.
Figure 11 is a schematic view of a raw material powder container used in a production method according to another embodiment of the present invention.

Best Mode for Carrying Out the Invention

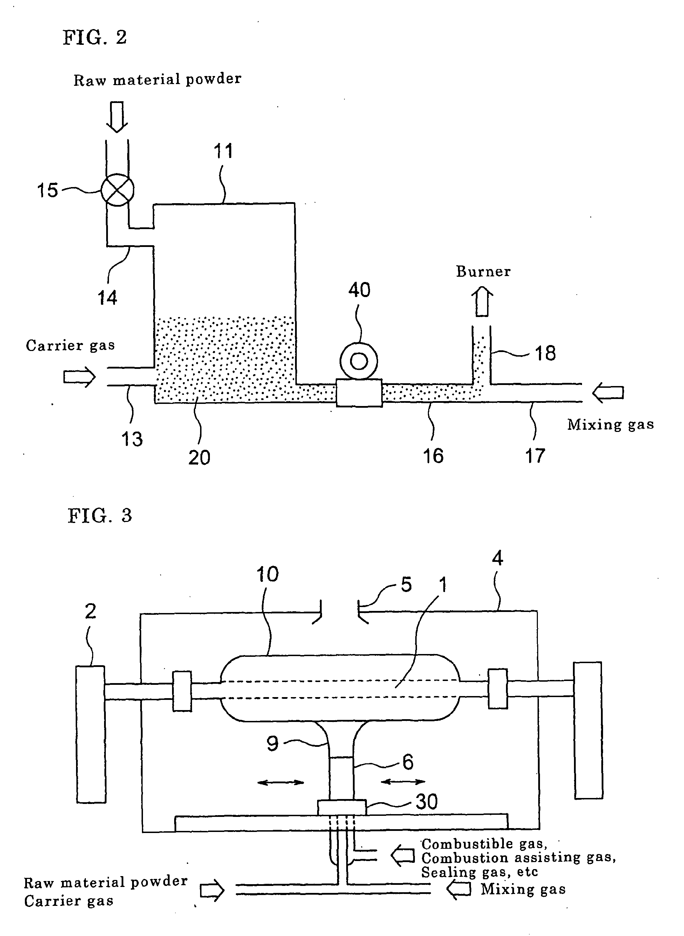

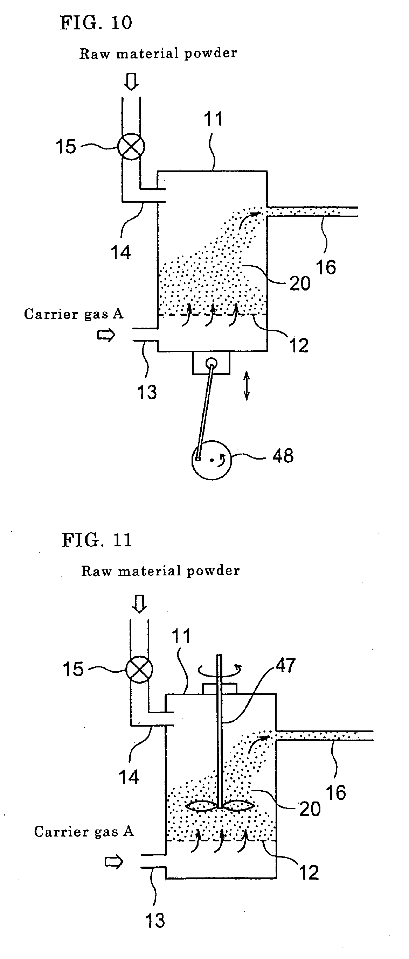

Embodiments of the present invention will be described below with reference to the drawings. In the drawings, the same reference numeral denotes the same portion in order to avoid duplication of description. In the drawings, a dimensional ratio is not always exact.
In this specification, the average diameter of particles that constitute a raw material powder means the diameter of the particle that comes at the cumulative particle number of 50% of the total number of the measured particles in a histogram of the number of particles against particle diameters on the basis of the results of measuring the diameters of about 1000 particles with a transmission electron microscope (TEM). The specific surface area of the raw material powder is measured by a BET method. The bulk density is measured by a method in which a powder to be measured is charged in a container having a certain volume while the container is lightly struck, and the mass of the powder charged in the container is divided by the internal volume of the container.

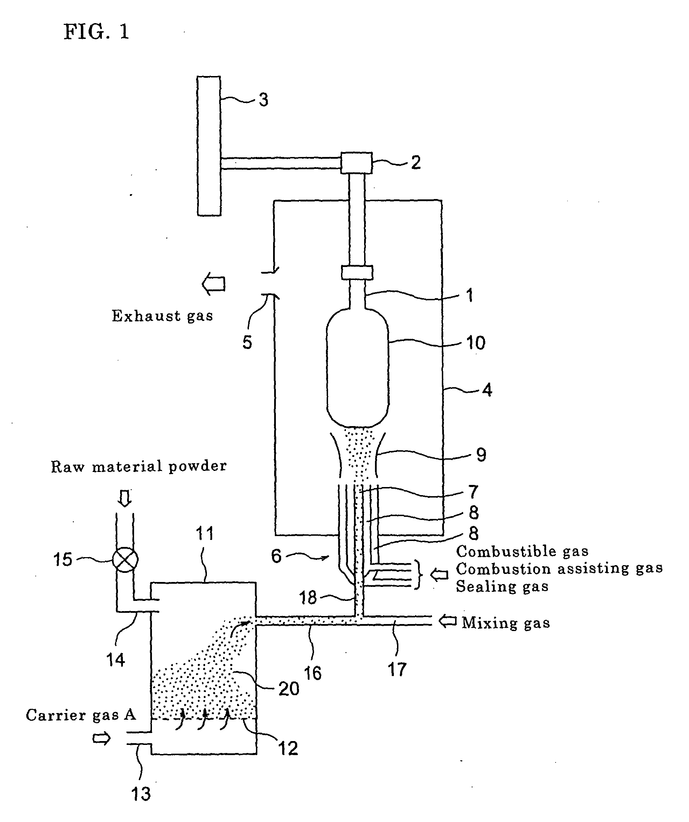

Figure 1 is a schematic view of an apparatus used for a production method according to a first embodiment of the present invention. The apparatus of the first embodiment has substantially the same configuration as that of a production apparatus for an axial deposition method known as a VAD method.

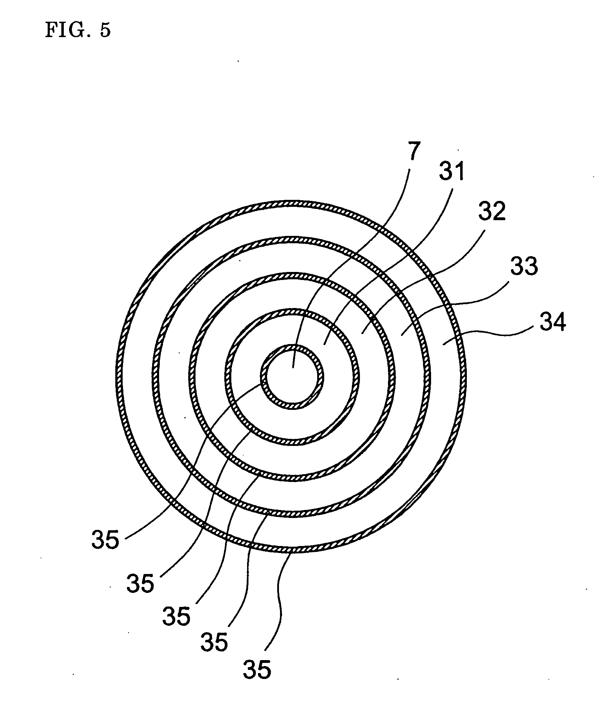

In Fig. 1, the top of a starting member 1 is connected to a rotation means 2 connected to a lifter 3 which can move the starting member 1 upward and downward. A reaction container 4 is disposed so as to surround the starting member 1, and a burner 6 is disposed at a lower portion of the reaction container so that a flame is ejected from the burner to the bottom of the starting member 1. The burner 6 is a multi-port burner including a central port 7 and outer ports 8 concentrically disposed outside the central port 7. Although Fig. 1 shows only two outer ports 8, for example, a quintuple-port burner comprising a central port and four outer ports, as shown in Fig. 5, or a septuple-port burner is actually used as the multi-port burner.
Furthermore, a pipe 18 is connected to the central port 7 of the burner 6, and a raw material powder supply line 16 and a mixing gas supply line 17 are connected to the pipe 18. The raw material powder supply line 16 is further connected to a raw material powder container 11. The inside of the raw material powder container 11 is partitioned by a mesh 12 disposed horizontally, and a raw material powder supply pipe 14 and a valve 15 are connected to the partitioned upper space. A raw material powder 20 is charged in the partitioned upper space. Furthermore, a carrier gas supply pipe 13 is connected to the lower space of the raw material powder container 11 partitioned by the mesh.
A carrier gas A is supplied, through the carrier gas supply pipe 13, to the lower space of the raw material powder container partitioned by the mesh. The carrier gas A supplied to the lower space flows into the upper space through the mesh and is mixed with the raw material powder 20. The raw material powder 20 is fluidized by being mixed with the carrier gas A, easily transferred with the carrier gas A, and flows into the raw material powder supply line 16 together with the carrier gas A. Therefore, a sufficient amount of the carrier gas A for fluidizing the raw material powder 20 is supplied to the lower space of the raw material powder container.
If a gas flow path is produced in the raw material powder during fluidization of the raw material powder in the raw material powder container, the gas flows only through the flow path, and accordingly a sufficient fluidization of the raw material powder cannot be achieved. In order to suppress such phenomenon, the raw material powder may be fluidized while the raw material powder and the carrier gas are mechanically mixed so as to break the gas flow path. Examples of a mixing method include a method of vibrating the raw material powder container with a shaker 48 (Fig. 10), and a method of rotating a rotor 47 in the raw material powder container (Fig. 11). The two methods may be combined.
The fluidized raw material powder and the carrier gas may be transferred into the flame by suction with a negative-pressure generating means. Figure 2 is a schematic view of an apparatus for a production method according to a second embodiment of the present invention. In the second embodiment, negative pressure is generated by the negative-pressure generating means (rotary pump 40). The raw material powder 20 is charged in the raw material powder container 11, and the carrier gas is supplied to the raw material powder container 11 from the carrier gas supply pipe 13 to fluidize the raw material powder 20. A mixture of the fluidized raw material powder 20 and the carrier gas is transferred to the burner 6 by the rotary pump 40 through the raw material powder supply line 16. Suction with the rotary pump 40 has the problem of supply pulsation due to the rotor and frictional abrasion between the rotor and the raw material powder.

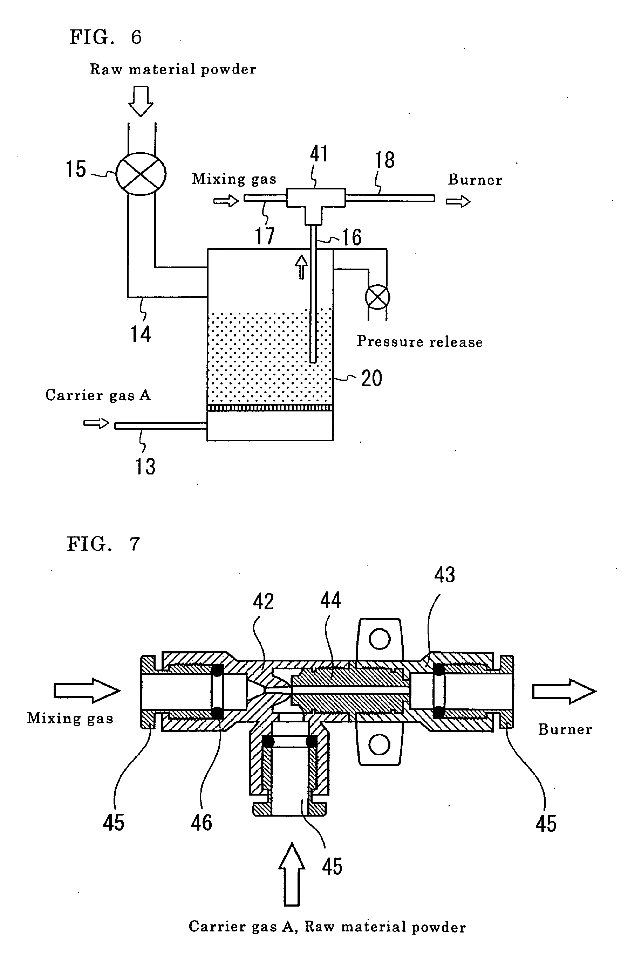

Figure 6 is a schematic view of an apparatus for a production method according to a third embodiment of the present invention. In the third embodiment, negative pressure is generated by a negative-pressure generating means (ejector 41). Figure 7 is a sectional view showing the configuration of the ejector. The ejector comprises a body 42, an adapter 43, a diffuser 44, a cassette 45, and a packing 46, and negative pressure is generated by flowing a gas. Although suction using this apparatus has an advantage over suction with the rotary pump in that no mechanical driving part is involved, the apparatus has a problem of difficulty in controlling the suction flow rate. In order to control the suction flow rate, it is effective to change the diameter of a suction port.

When the flow rate of the carrier gas is decreased, the raw material powder easily adheres to the wall of the pipe. Therefore, it is difficult to control the supply of the fluidized raw material powder only by controlling the flow rate of the carrier gas. In order to control the supply of the raw material powder while maintaining the flow rate at a predetermined value or more, the supply of the raw material powder may be controlled by controlling the mixing ratio of the raw material powder to the carrier gas.

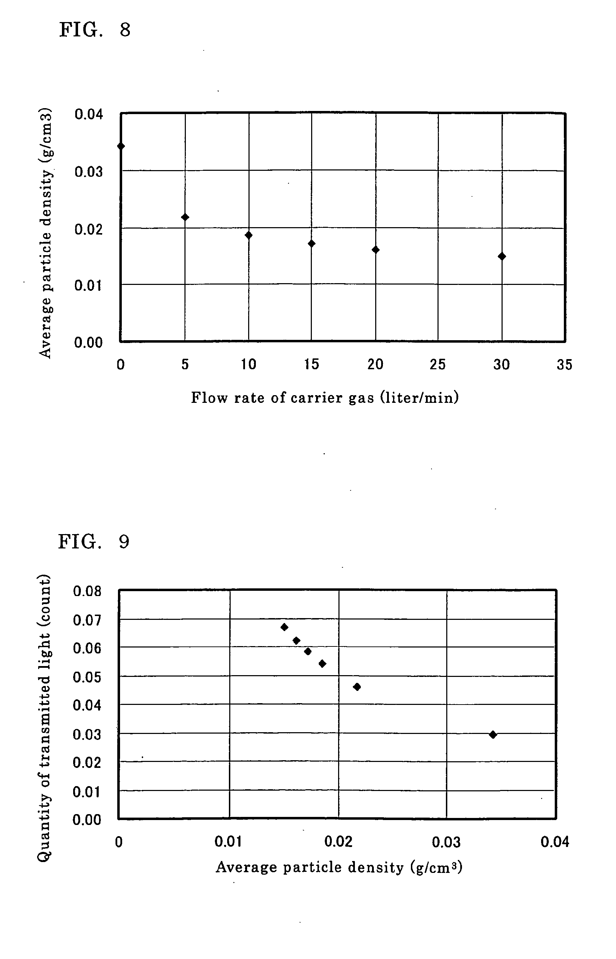

Figure 8 is a graph showing the relation between the flow rate of the carrier gas introduced into the raw material powder container and the average particle density of the raw material powder in the raw material powder container. The average particle density can be decreased from 0.03 g/cm$^3$ to 0.015 g/cm$^3$ by increasing the flow rate of the carrier gas. The average particle density of the raw material powder is determined from the mass and apparent volume of the powder. The mixing ratio may be controlled by controlling the flow rate of the carrier gas on the basis of the above-described relation.

The particle density of the raw material powder can also be determined by a method in which the quantity of transmitted light is measured by laser scattering using a photoelectric sensor provided at the tip of the raw material powder supply pipe. In this case, the relation (Fig. 9) between the particle density of the raw material powder and the quantity of transmitted light must be previously determined. Thus, by optically measuring the density of the raw material powder, it was found that there is a relation between the height of the raw material powder from the bottom of the container and the particle density of the raw material powder, and that the density decreases as the height of the raw material powder increases. This is due to the fact that the raw material powder is fluidized according to the balance between the gravitational settling of the raw material powder and the gas fluidization. Therefore, the mixing ratio can be controlled by adjusting the tip position of the raw material powder supply pipe inserted into the raw material powder container.

In the apparatus of the first embodiment, a desired gas (mixing gas) is supplied through the mixing gas supply line 17, and in the pipe 18, the mixing gas is mixed with the mixture of the raw material powder 20 and the carrier gas A that has come through the raw material powder supply line 16. Then, the mixture of the raw material powder 20, the carrier gas A, and the mixing gas is supplied into the flame from the central port 7 of the burner 6. Namely, the mixing gas also functions as a carrier gas for transporting the raw material powder.

Furthermore, a combustible gas, a combustion assisting gas, and a sealing gas are supplied to the outer ports 8 of the burner 6. The flame 9 is formed by the combustible gas and the combustion assisting gas supplied to the burner.

As the combustible gas, at least one selected from the group consisting of hydrogen gas, methane gas, and ethylene gas is preferably used. Particularly, hydrogen gas is preferred because the temperature of the flame can be increased. As the combustion assisting gas, for example, oxygen and/or air is preferably used. As the carrier gas A, an inert gas or nitrogen gas is preferred, and for example, at least one gas selected from the group consisting of helium, argon, and nitrogen is preferably used. The carrier gas A may be mixed with a combustible gas or combustion assisting gas. As the mixing gas, the combustible gas or the combustion assisting gas is preferably used.

The production method of the present invention has a high degree of freedom of the burner combustion conditions, and thus the burner combustion conditions can be determined to further increase the thermophoresis effect of the glass particulates used as the raw material.

The starting member 1 is rotated by the rotation means 2 around the vertical rotational axis. The flame 9 is ejected to the starting member 1 or a porous body 10 under formation, and the raw material powder 20, i.e., the glass particulates, contained in the flame 9 are fused or softened in the flame so as to be attached and deposited on the surface of the starting member 1 or the porous body 10, which is rotated around the rotational axis. Thus, the glass particulates are attached to the lower portion of the starting member 1 or the porous body 10 so as to form a porous glass layer while the staring member 1 is pulled upward by the lifter 3 such that the porous body 10 grows downward. Of the gases and the raw material powder 20 ejected from the burner 6, the gases and the row material powder 20 other than those deposited on the starting member 1 are discharged to the outside of the reaction container 4 through an exhaust port 5.

The amount of the raw material powder 20 contained in the raw material powder container 11 gradually decreases as production of the porous body 10 proceeds. However, the valve 15 is opened for appropriately supplying the raw material powder 20 to the raw material powder container 11 from the raw material powder supply pipe 14.

In the production method of the present invention, a multi-port burner is preferably used as the burner 6. Figure 5 is a front view of an example of the multi-port burner. The burner shown in Fig. 5 is a quintuple-port burner comprising a central port 7, a second port 31 disposed near the periphery of the central port 7, and a third port 32, a fourth port 33, and a fifth port 34 disposed outside the second port 31 in that order. In order to separate the respective ports, cylindrical partitions 35 composed of quartz glass are concentrically disposed. In the production method of the present invention, the mixture containing the raw material powder 20 and the carrier gas (the carrier gas A and if required, the mixing gas) is supplied to the central port 7. When a gas containing at least one selected from the group consisting of the combustible gas, e.g., hydrogen gas, and the combustion assisting gas, e.g., oxygen gas, is used as the carrier gas (the carrier gas A, and if required, the mixing gas), the raw material powder is deposited on the surface of the starting member 1 with high efficiency. This is possibly due to an increase in the temperature of the raw material powder in the burner flame.

Examples of a combination of the types of the gases supplied to the respective ports of the quintuple-port burner are described below. However, the combination is not limited to these examples.

(i) A mixture of dry air used as the carrier gas A and oxygen gas used as the mixing gas is supplied to the central port 7 of the burner 6. Also, Ar gas, hydrogen gas, Ar gas, and oxygen gas are supplied to the second port 31, the third port 32, the fourth port 33, and the fifth port 34, respectively.
(ii) A gas mixture of helium gas and hydrogen gas is used as the carrier gas A, and a mixture of the carrier gas A and oxygen gas used as the mixing gas is supplied to the central port 7 of the burner 6. Also, Ar gas, oxygen gas, Ar gas, and hydrogen gas are supplied to the second port 31, the third port 32, the fourth port 33, and the fifth port 34, respectively.

A person skilled in the art can appropriately determine the amount of the gas supplied to each port so as to obtain a desired result.

Other ports may be concentrically disposed around the periphery of the above-described multi-port burner, for supplying a combustible gas and a combustion assisting gas to further form a flame around the periphery of the multi-port burner. This method is preferred because the flame can be widened to permit uniform heating of the entirety of the porous body.

In the production method of the present invention, a powder containing silica glass is preferably used as the raw material powder. An example of a powder containing silica glass is a powder obtained by hydrolysis and condensation of at least one raw material selected from the group consisting of $SiCl_4$ and organosilicon compounds such as tetraalkoxysilane. The raw material powder can also be produced by oxidation reaction of $SiCl_4$ or an organosilicon compound, for example, $(CH_3)_3SiOSi(CH_3)_3$. The $SiO_2$ particulates are commercially available. Examples of the commercial $SiO_2$ particulates include AEROSIL (trademark) produced by DEGUSSA Co., Ltd. in Germany and Nano Tek (trademark) produced by C.I. Chemical Co., Ltd. $SiO_2$ particulates having an average diameter of 7 to 50 nm are known.

In the present invention, the $SiO_2$ particulates having an average particle diameter of 0.2 $\mu$m or less, more preferably 0.05 $\mu$m or less, are preferably used as the raw material powder 20 because the particulates are unlikely to agglomerate and have high fluidity in a mixture with the carrier gas. Such $SiO_2$ particulates generally have a bulk density of 0.03 to 0.1 $g/cm^3$ which is only 1.5% to 5% of the true density 2.2 $g/cm^3$ of $SiO_2$ glass. The low bulk density is possibly due to electrostatic repulsion between respective particulates due to an electrostatic charge on the particle surfaces. The powder containing the $SiO_2$ particulates having a low bulk density and a low degree of particulate agglomeration has a low cohesive force between the particulates and thus has the property of flowing together with a gas flow when being mixed with a gas. In the production method of the present invention, therefore, the raw material powder containing the $SiO_2$ particulates is preferably used. Of course, the $SiO_2$ particulates may be mixed with other particles within a range in which the particulates can be transferred with the carrier gas.

The $SiO_2$ particulates used in the production method of the present invention contain SiOH groups on the surfaces thereof, and at least some of the SiOH groups may be replaced with SiOR groups by a know method. Examples of the R of an SiOR group include a $(CH_3)_3Si$ group, an - $OSi((CH_3)_2)SiO$ group, a $(tert-C_4H_9)(CH_3)_2Si$ group, and a $(C_2H_5)_3Si$ group. When $SiO_2$ particulates having organic groups on the surfaces (hydrophobic $SiO_2$ particulates) are used as the raw material powder 20, there is the effect of increasing the efficiency of deposition of the glass particulates on the starting member 1, as compared with $SiO_2$ particulates having no organic group on the surfaces (hydrophilic $SiO_2$ particulates). This is possibly due to the fact that the temperature of the $SiO_2$ particulates is increased by combustion of the organic groups in the burner flame, thereby effectively depositing the glass particulates on the starting member by the thermophoresis effect.

When the SiOH groups are replaced with organofunctional groups, an excellent effect is exerted on the fluidizing properties of the raw material powder. When the functional groups of the hydrophilic $SiO_2$ particulates are present on the surfaces of the powder particulates, atmospheric moisture may be adsorbed on the surfaces, thereby causing agglomeration of the powder. This phenomenon necessitates heating the powder or substitution by a gas containing no moisture, such as dry air or $N_2$, for the storage of the powder. The hydrophobic $SiO_2$ particulates, in which an organic material inhibits water adsorption, can maintain high fluidity without causing agglomeration over a long period of time. The effect of improving fluidity can also be achieved by mixing the hydrophilic $SiO_2$ particles with several percent or more of hydrophobic $SiO_2$ particles. Hydrophobizing of a powder is performed by heat-treating a hydrophilic $SiO_2$ powder at about 500°C in an atmosphere of an organosilicon compound gas, as disclosed in Japanese Examined Patent Application Publication No. S41-17049 (German Patent Application No. 38532).

In the production method of the present invention, a combination of the $SiO_2$ powder and a powder of at least one metal oxide selected from the group consisting of $Al_2O_3$, $B_2O_3$, $TiO_2$, and $GeO_2$ can be used as the raw material powder 20. As the metal oxide powder used for the production method of the present invention, for example, metal oxide particulates produced by evaporation and oxidation of a metal are preferred. Examples of the metal oxide powder include an $Al_2O_3$ powder (an average diameter of 0.033 μm measured by the BET method, an apparent specific gravity of 0.23 g/cm$^3$, and a specific surface area of 50 m$^2$/g measured by the BET method; produced by C.I. Kasei Co., Ltd.), and a $TiO_2$ powder (an average diameter of 0.030 μm measured by the BET method, an apparent specific gravity of 0.26 g/cm$^3$, and a specific surface area of 50 m$^2$/g measured by the BET method; produced by C.I. Kasei Co., Ltd.).

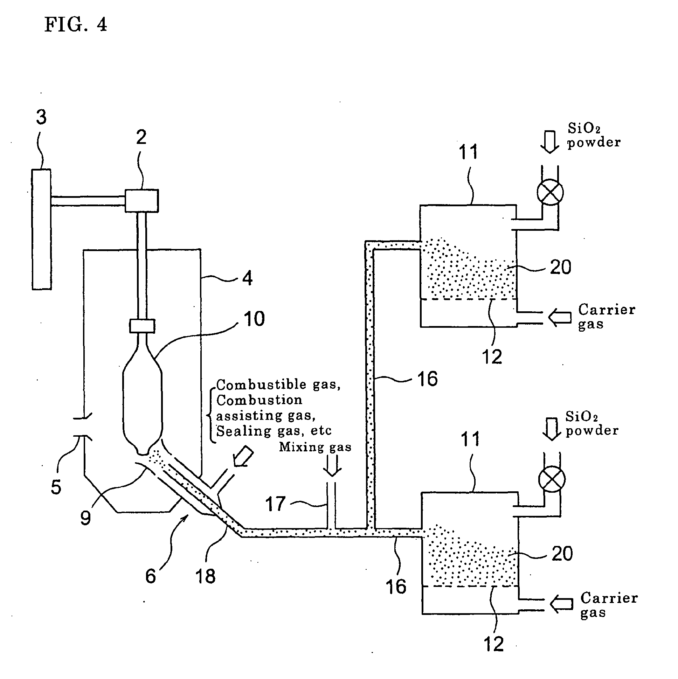

Examples of a method for combining the $SiO_2$ powder and another metal oxide powder include a method using a raw material which comprises a mixture of the $SiO_2$ powder and another metal oxide powder, a method of supplying the $SiO_2$ powder and another metal oxide powder to the same burner flame through separate supply lines, each of the $SiO_2$ powder and the other metal oxide powder being fluidized by being mixed with the carrier gas (corresponding to an apparatus for the production method according to a fourth embodiment of the present invention), and a method of supplying a composite oxide powder, which is synthesized at a predetermined elementary ratio, to the flame. Figure 4 is a schematic view of the apparatus for the production method according to the fourth embodiment of the present invention. Figure 4 shows an example of the use of the raw material powder including $SiO_2$ and $GeO_2$. Similarly, at least three raw material powder containers 11 can be provided on the apparatus shown in Fig. 4, so that at least three types of raw material powders can be used. In combination of the $SiO_2$ powder with the other metal oxide powder, the ratio of the other metal oxide powder to the $SiO_2$ powder is not particularly limited. By using the metal oxide powder other than the $SiO_2$ powder for the raw material powder, the optical characteristics of the resultant glass blank and the characteristics in a melting state, such as viscosity, can be controlled. For example, when $GeO_2$ is added to $SiO_2$, the refractive index of the resultant glass can be increased 1% by adding about 15% by mass of $GeO_2$. Also, the thermal expansion coefficient of the resultant glass can be decreased by adding $TiO_2$ to $SiO_2^-$.

The production method of the present invention can also be applied to an apparatus similar to an apparatus for the OVD method. Figure 3 is a schematic view showing an apparatus for the production method according to a fifth embodiment of the present invention. In Fig. 3, a starting member 1, e.g., a glass rod, is connected to a rotation means 2, and a reaction container 4 is disposed to surround the starting member 1. A burner 6 is connected to a moving means 30 so that the burner 6 can be reciprocated substantially in parallel with the rotational axis along the longitudinal direction of the starting member 1. An apparatus for supplying a raw material powder and a carrier gas has the same configuration as that in the first and fourth embodiments. Furthermore, the burner used in the fifth embodiment can be replaced by a burner row including at least two burners disposed in parallel in the axial direction of the starting member.

In Fig. 3, the starting member 1 is rotated around the rotational axis, and the burner 6 is reciprocated within a predetermined region substantially in parallel with the longitudinal direction of the starting member 1. At the same time, a mixture of the raw material powder and the carrier gas, and a gas selected from a combustible gas, a combustion assisting gas, and a sealing gas are supplied to the burner 6, and a flame 9 is ejected from the burner 6 so that the glass particulates contained in the flame 9 are attached and deposited on the surface of the starting member 1 to produce a porous body 10. Although Fig. 3 shows the apparatus in which the burner 6 is reciprocated relative to the starting member 1, the starting member 1 may be reciprocated within a predetermined range relative to the fixed burner 6, or both the burner 6 and the starting member 1 may be relatively reciprocated.

The porous body 10 produced by the method of the present invention is further sintered by a known heating method and consolidated to produce a transparent glass blank. An example of a method for consolidating the porous body 10 comprises dehydrating the porous body 10 by heating at 1100°C in an atmosphere of a gas mixture of chlorine gas and He gas, and further heating the porous body 10 at 1550°C in an He gas atmosphere to produce transparent glass. Fluorine-containing $SiO_2$ glass can be produced, after the dehydration, by heat-treating the porous body 10 at 1000°C to 1400°C in an atmosphere containing at least one fluorocompound gas selected from the group consisting of $SiF_4$, $CF_4$, $C_2F_6$, $CCl_2F_2$, and $SF_6$. Similarly, Cl-containing glass can be produced by treating the porous body 10 with Cl (chlorine) compound gas selected from the group consisting of $SiCl_4$, $CCl_4$, and the like. A transparent glass blank thus produced according to the above-described methods has optical properties equivalent to those of glass blanks produced by the conventional OVD method and VAD method, and the transparent glass blank can be used as, for example, an optical fiber preform.

In each of the examples and the comparative example below, the apparatus of the first embodiment is used, and the multi-port burner shown in Fig. 5 is used. In each of the examples and the comparative example, a flame containing glass particulates is ejected to a lower portion of a starting member from the burner while the starting member is rotated. The glass particulates are deposited on the starting member, and at the same time, the starting member is pulled upward along the axial direction in conformity with the deposition rate to grow a glass particulate deposit in the lower portion of the starting member.

(Example 1)

A SiO$_2$ powder (trade name: AEROSIL (trademark) 380, (produced by DEGUSSA Co., Ltd.)) is used as a raw material. The powder has an average particle diameter of 0.007 μm, and a specific surface area of 380 m$^2$/g.

The SiO$_2$ powder is charged in the upper portion of the raw material powder storage container 11 partitioned into the upper and lower spaces with a mesh, and dry air functioning as the carrier gas is introduced at a rate of 0.5 liter/min into the SiO$_2$ powder from the bottom of the container through the mesh. The raw material powder is fluidized by being mixed with the dry air, and transferred, together with the dry air, to the raw material powder supply line 16 from the raw material powder storage container. A mixture of the raw material powder and the dry air that has come through the raw material powder supply line 16 is mixed with an O$_2$ gas supplied through the mixing gas supply line 17, and then ejected into the flame from the central port of the burner. With respect to the amounts of these components supplied, the amounts of the SiO$_2$ powder, the dry air, and the O$_2$ gas are 10 to 11 g/min, 0.5 liter/min, and 2 liter/min, respectively. Furthermore, sealing Ar gas is supplied to the second port of the burner at a rate of 3 liter/min, H$_2$ gas is supplied to the third port of the burner at a rate of 20 liter/min, Ar gas is supplied to the fourth port of the burner at a rate of 3 liter/min, and O$_2$ gas is supplied to the fifth port of the burner at a rate of 15 liter/min. Furthermore, concentric ports are disposed around the periphery of the burner, for supplying H$_2$ and O$_2$, respectively, so that an outer flame is formed by the supplied H$_2$ and O$_2$.

The glass particulates are deposited on the starting member for 6 hours to produce a porous body. The resultant porous body has a mass of 3000 g, an average outer diameter of 15 cm, and a length of 80 cm. The deposition yield of the raw material powder (ratio of the powder deposited on the starting member to the total of the powder supplied) is determined to be 75% from the ratio of the mass of the porous body to the mass of the raw material powder supplied to the burner. The porous body is placed in a quartz furnace muffle tube and heated to 1100°C. At the same time, chlorine gas and He gas are caused to flow in the furnace muffle tube at a rate of 500 cc/min and 15 liter/min, respectively, to dehydrate the porous body. Then, the porous body is consolidated by heating to 1550°C while He is caused to flow in the furnace muffle tube at a rate of 15 liter/min. The resultant transparent glass blank has no bubble, and light absorption at 2.7 μm band due to a SiOH group is not recognized.

(Example 2)

An SiO$_2$ powder (trade name: AEROSIL (trademark) 380, (produced by DEGUSSA Co., Ltd.)) is used as a raw material. He gas is used as the carrier gas at a flow rate of 0.5 liter/min. A mixture of the fluidized raw material powder (10 to 11 g/min) and He gas is mixed with H$_2$ gas supplied at a flow rate of 2 liter/min through the mixing gas supply line 17, and then ejected into the flame from the central port of the burner. Furthermore, a sealing Ar gas is supplied to the second port of the burner at a rate of 3 liter/min, O$_2$ gas is supplied to the third port of the burner at a rate of 10 liter/min, Ar gas is supplied to the fourth port of the burner at a rate of 3 liter/min, and H$_2$ gas is supplied to the fifth port of the burner at a rate of 12 liter/min. Furthermore, other ports are disposed around the periphery of the burner, for supplying H$_2$ and O$_2$, respectively, so that an outer flame is formed by the supplied H$_2$ and O$_2$.

The glass particulates are deposited on the starting member for 6 hours to produce a porous body. The resultant porous body has a mass of 3200 g, an average outer diameter of 15 cm, and a length of 80 cm. The deposition yield of the raw material powder is determined to be 80% from the ratio of the mass of the porous body to the mass of the raw material powder supplied to the burner. The deposition yield is higher than that in Example 1 possibly as a result of the temperature of the flame being increased as the mixture of the raw material powder and H$_2$ gas is supplied into the burner flame. The resultant porous body is dehydrated and consolidated by the same method as in Example 1. The resultant transparent glass blank has no bubble, and light absorption due to a SiOH group is not observed at 2.7 μm.

(Example 3)

An SiO$_2$ powder (trade name: AEROSIL (trademark) 130, (produced by DEGUSSA Co., Ltd.)) is used as a raw material. The powder has an average particle diameter of 0.016 μm, and a specific surface area of 130 m$^2$/g.

The raw material powder is fluidized with dry air functioning as the carrier gas at a flow rate of 0.4 liter/min. A mixture of the fluidized raw material powder (10 to 10.5 g/min) and the dry air is mixed with O$_2$ gas supplied at a flow rate of 2 liter/min through the mixing gas supply line 17, and then ejected into the flame from the central port of the burner. Furthermore, a sealing Ar gas is supplied to the second port of the burner at a rate of 3 liter/min, H$_2$ gas is supplied to the third port of the burner at a rate of 30 liter/min, Ar gas is supplied to the fourth port of the burner at a rate of 3 liter/min, and O$_2$ gas is supplied to the fifth port of the burner at a rate of 18 liter/min. Furthermore, other ports are disposed around the periphery of the burner, for supplying H$_2$ and O$_2$, respectively, so that an outer flame is formed by the supplied

$H_2$ and $O_2$.

The glass particulates are deposited on the starting member for 7 hours to produce a porous body. The resultant porous body has a mass of 3500 g, an average outer diameter of 16 cm, and a length of 80 cm. The deposition yield of the raw material powder is determined to be 80% from the ratio of the mass of the porous body to the mass of the raw material powder supplied to the burner. The resultant porous body is dehydrated and consolidated by the same method as in Example 1. The resultant transparent glass blank has no bubble, and light absorption due to an SiOH group is not observed at 2.7 μm.

Furthermore, the transparent glass blank is used as a core portion, and a clad composed of fluorine-containing $SiO_2$ glass is formed on the periphery of the core portion to produce an optical fiber preform by a known OVD method. The preform is used for producing a single-mode optical fiber having a core diameter of 9 μm and a relative refractive index difference of 0.35%. With respect to the transmission loss of the resultant optical fiber, an increase in light absorption at 1.38 μm band due to an OH group is 0.25 dB/km. In the resultant optical fiber, absorption at 0.6 to 1.8 μm band due to impurities contained in the glass and defects of the glass is not recognized, and the optical characteristics are equivalent to those of optical fibers produced by the conventional known VAD method and OVD method using $SiCl_4$ and the like as a raw material.

(Example 4)

An $SiO_2$ powder (trade name: AEROSIL (trademark) R202, (produced by DEGUSSA Co., Ltd.)) is used as a raw material. The powder has an average particle diameter of 0.014 μm, and a specific surface area of 200 $m^2/g$. The powder contains particles having -O-Si$((CH_3)_2)$-o- groups substituted for surface OH groups. The method for fluidizing the raw material, and the type and flow rate of the gas supplied to each port of the burner are the same as in Example 3.

The glass particulates are deposited on the starting member for 6 hours to produce a porous body. The resultant porous body has a mass of 3200 g, an average outer diameter of 16 cm, and a length of 80 cm. The deposition yield of the raw material powder is determined to be 84% from the ratio of the mass of the porous body to the mass of the raw material powder supplied to the burner. The ratio of the raw material powder deposited on the starting member is higher than that in Example 3 possibly due to the organic groups present on the particle surfaces of the raw material powder being oxidized in the burner flame to generate combustion heat and the temperature of the raw material powder being further increased by the combustion heat. The resultant porous body is dehydrated and consolidated by the same method as in Example 1. The resultant transparent glass blank has no bubble, and light absorption due to an SiOH group is not observed at 2.7 μm.

(Comparative Example 1)

$SiCl_4$ is used as a glass raw material. A raw material supply system is used, in which the raw material powder storage container and the raw material powder supply line shown in Fig. 1 are replaced respectively with a liquid raw material storage container having a structure for bubbling the raw material with a carrier gas and a raw material supply line for supplying the vaporized raw material and the carrier gas to the central port of the burner from the container.

The glass particulates are deposited on the starting member for 7 hours to produce a porous body. The resultant porous body has a mass of 2500 g, an average outer diameter of 15 cm, and a length of 60 cm. The deposition yield of $SiCl_4$ is determined to be 60 mol% from the ratio of the mass of the porous body to the mass of $SiCl_4$ supplied to the burner. The resultant porous body is dehydrated and consolidated by the same method as in Example 1. The resultant transparent glass blank has no bubble, and light absorption due to an SiOH group is not observed at 2.7 μm.

$SiCl_4$ is stored in the liquid raw material storage container, and bubbled with Ar gas to vaporize $SiCl_4$. A mixture of the vaporized $SiCl_4$ and the Ar gas used as the carrier gas is supplied through the raw material supply line, and at an intermediate position thereof is mixed with $H_2$ gas supplied from a mixing gas supply line, and then supplied to the flame from the central port of the burner.

With respect to the supply rate of each component to the central port of the burner, the rate of $SiCl_4$ is 10 g/min as converted in terms of $SiO_2$, and the rate of $H_2$ gas used as the mixing gas is 1 liter/min. Furthermore, a sealing Ar gas is supplied to the second port of the burner at a rate of 10 liter/min, $O_2$ gas is supplied to the third port of the burner at a rate of 20 liter/min, Ar gas is supplied to the fourth port of the burner at a rate of 3 liter/min, and $H_2$ gas is supplied to the fifth port of the burner at a rate of 30 liter/min. Furthermore, an outer flame is formed around the periphery of the burner by the same method as in Example 3.

The disclosure of Japanese Patent Application No. 2003-75866 (filed on March 17, 2003), including the specification, the claims, the drawings, and the abstract, is incorporated by reference into this specification in its entirety.

Industrial Applicability

A transparent glass blank produced by the method of the present invention can be used as an optical fiber glass preform or a silica glass product having heat resistance or a raw material therefor.

## Claims

1. A method of producing a glass blank, comprising:

   transporting a raw material powder including silica-glass-containing particles with a carrier gas,
   supplying the raw material gas into a flame,
   forming a porous body by spraying the raw material powder and the flame on a starting member so as to deposit the raw material powder on the starting member, and
   heating the porous body to consolidate it.

2. The method of producing a glass blank according to claim 1, wherein the average particle diameter of the particles is 0.2 µm or less.

3. The method of producing a glass blank according to claim 1, wherein the carrier gas contains a combustible gas.

4. The method of producing a glass blank according to claim 1, wherein the carrier gas contains a combustion assisting gas.

5. The method of producing a glass blank according to claim 1, wherein the carrier gas contains a combustible gas and a combustion assisting gas.

6. The method of producing a glass blank according to claim 1, wherein at least one of the Si-OH groups possessed by the particles are replaced with an Si-OR group (wherein R represents an organic group).

7. The method of producing a glass blank according to claim 1, wherein the raw material powder is fluidized by being mixed with the carrier gas in a raw material powder container before being transferred with the carrier gas.

8. The method of producing a glass blank according to claim 7, wherein the raw material powder is fluidized by mechanically mixing the raw material powder and the carrier gas.

9. The method of producing a glass blank according to claim 8, wherein the raw material powder container is vibrated to mechanically mix the raw material powder and the carrier gas.

10. The method of producing a glass blank according to claim 8, wherein a rotor is rotated in the raw material powder container to mechanically mix the raw material powder and the carrier gas.

11. The method of producing a glass blank according to claim 7, wherein the fluidized raw material powder and the carrier gas are transferred into the flame by suction with a negative-pressure generating means.

12. The method of producing a glass blank according to claim 1, wherein the amount of the raw material powder supplied is controlled by controlling the mixing ratio of the raw material powder to the carrier gas.

13. The method of producing a glass blank according to claim 12, wherein the mixing ratio is controlled by controlling the flow rate of the carrier gas.

14. The method of producing a glass blank according to claim 12, wherein the mixing ratio is controlled by controlling the tip position of a raw material powder supply pipe inserted into the raw material powder container.

FIG. 1

Exhaust gas

Raw material powder

Combustible gas
Combustion assisting gas
Sealing gas

Mixing gas

Carrier gas A

## FIG. 2

Raw material powder

Carrier gas

Burner

Mixing gas

15
11
14
13
20
40
16
17
18

## FIG. 3

2
10
5
1
4
9
6
30

Raw material powder
Carrier gas

Combustible gas,
Combustion assisting gas,
Sealing gas, etc

Mixing gas

FIG. 4

Combustible gas,
Combustion
assisting gas,
Sealing gas, etc
Mixing gas

SiO₂ powder

SiO₂ powder

Carrier gas

Carrier gas

FIG. 5

FIG. 6

Raw material powder

Mixing gas

Burner

Pressure release

Carrier gas A

FIG. 7

Mixing gas

Burner

Carrier gas A, Raw material powder

FIG. 8

FIG. 9

FIG. 10

Raw material powder

FIG. 11

Raw material powder

## INTERNATIONAL SEARCH REPORT

| | International application No. |
|---|---|
| | PCT/JP2004/003446 |

**A. CLASSIFICATION OF SUBJECT MATTER**
Int.Cl$^7$ C03B20/00

According to International Patent Classification (IPC) or to both national classification and IPC

**B. FIELDS SEARCHED**

Minimum documentation searched (classification system followed by classification symbols)
Int.Cl$^7$ C03B20/00, C03B8/00-8/04

Documentation searched other than minimum documentation to the extent that such documents are included in the fields searched
| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| Y | JP 11-217224 A (Toshiba Ceramics Co., Ltd.), 10 August, 1999 (10.08.99), Claim 1; Par. No. [0012] (Family: none) | 1-14 |
| Y | JP 2002-20132 A (Tosoh Quartz Corp.), 23 January, 2002 (23.01.02), Claims; Figs. 1 to 7 (Family: none) | 1-14 |
| Y | Masayuki YAMANE et al., "Glass Kogaku Handbook", 1st edition, Kabushiki Kaisha Asakura Shoten, 05 July, 1999 (05.07.99), page 486 | 4,5 |

| ☒ Further documents are listed in the continuation of Box C. | ☐ See patent family annex. |
|---|---|

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 09 April, 2004 (09.04.04) | 11 May, 2004 (11.05.04) |

| Name and mailing address of the ISA/ <br> Japanese Patent Office | Authorized officer |
|---|---|
| Facsimile No. | Telephone No. |

Form PCT/ISA/210 (second sheet) (January 2004)

**INTERNATIONAL SEARCH REPORT**

International application No.

PCT/JP2004/003446

C (Continuation). DOCUMENTS CONSIDERED TO BE RELEVANT

| Category* | Citation of document, with indication, where appropriate, of the relevant passages | Relevant to claim No. |
|---|---|---|
| Y | JP 07-304518 A (Sakito Seien Kabushiki Kaisha), 21 November, 1995 (21.11.95), Claims 1, 3; Figs. 1 to 7 (Family: none) | 7-9 |
| Y | JP 02-127319 A (Nisshin Flour Milling Co., Ltd.), 16 May, 1990 (16.05.90), Claims; Figs. 1 to 5 (Family: none) | 7,8,10 |
| Y | JP 08-165021 A (Kabushiki Kaisha MATSUI Seisakusho), 25 June, 1996 (25.06.96), Claims; Figs. 1 to 15 (Family: none) | 11 |
| Y | JP 06-24556 A (Fujikura Ltd.), 01 February, 1994 (01.02.94), Claim 1; Par. No. [0011]; Figs. 1 to 3 (Family: none) | 14 |

Form PCT/ISA/210 (continuation of second sheet) (January 2004)